# EUROPÄISCHE PATENTSCHRIFT

(11) **EP 1 703 122 B1**
(45) Veröffentlichungstag und Bekanntmachung des Hinweises auf die Patenterteilung: **21.04.2010**
(21) Anmeldenummer: 06001664.9
(22) Anmeldetag: 27.01.2006
(51) Int. Cl.: F02M 65/00, F02D 41/20

(54) **Verfahren und Einrichtung zur Erfassung des Einspritzvorgangs eines Kraftstoffinjektors einer Brennkraftmaschine mittels eines Schallsensors**
Method and apparatus for capturing with an acoustic sensor the injection process of an internal combustion engine
Procédé et système pour capturer avec un capteur acoustique le procédé d'injection d'un moteur à combustion interne

(30) Priorität: 05.02.2005 DE 102005005351
(43) Veröffentlichungstag der Anmeldung: 20.09.2006
(73) Patentinhaber: L'ORANGE GMBH, D-70435 Stuttgart (DE)
(72) Erfinder: Hansmann, Jan, 70184 Stuttgart (DE); Ziegler, Thomas, 73730 Esslingen am Neckar (DE)

(56) Entgegenhaltungen:
- EP-A- 0 244 258
- GB-A- 2 089 986
- PATENT ABSTRACTS OF JAPAN Bd. 009, Nr. 219 (M-410), 6. September 1985 (1985-09-06) & JP 60 079161 A (BANDAI:KK; others: 01), 4. Mai 1985 (1985-05-04)

## Beschreibung

Die Erfindung betrifft ein Verfahren und eine Einrichtung zur Erfassung des Einspritzvorgangs eines mit einer zwischen einer Öffnungsstellung und einer Schließstellung beweglichen Düsennadel versehenen Kraftstoffinjektors einer Brennkraftmaschine durch Auswertung einer mittels eines Schallsensors aufgenommenen Schallkurve.

Zur Überwachung des Betriebs von Brennstoffmaschinen und insbesondere des Betriebs von Kraftstoffinjektoren von Brennkraftmaschinen, welche mit einer zwischen einer Öffnungsstellung und einer Schließstellung beweglichen Düsennadel versehen sind, ist es bekannt, eine mittels eines Schallsensors aufgenommene Schallkurve zur Auswertung heranzuziehen. So ist es beispielsweise aus der DE 26 58 253 A1, der US 3 731 527 und der DE 32 28 955 A1 bekannt, eine mittels einer an einem Kraftstoffinjektor einer Brennkraftmaschine angebrachten Schallsensors aufgenommene Schallkurve in Hinblick auf die Erfassung des Anschlagens der in dem Kraftstoffinjektor vorgesehenen Düsennadel am Ende ihrer Öffnungs- oder Schließbewegung auszuwerten. Bei einem ähnlichen Vorgehen, das aus der JP 60138247 A bekannt ist, wird eine dem Beginn des Kraftstoffeinspritzvorgangs zugeordnete Amplitudenspitze mittels eines Schwingungsformanalysators diskriminiert und ausgewertet. In der US 6 167 852 B1 enthält eine Schwingungserfassungsschaltung einen Komparator, mit welchem die beim Anschlagen der Ventilnadel erzeugte Schwingungsspitze zu ihrer Erfassung mit einem vorgegebenen Schwellwert verglichen wird. In der JP 57188764 A wird zur Überwachung eines Kraftstoffinjektors einer Brennkraftmaschine von der erfassten Schwingung eine Komponente mit vorgegebener Frequenz extrahiert und das Verhalten des Injektors auf Grund der Schwingungsform dieses Signals beurteilt. Schließlich ist es aus der DE 697 01 500 T2 bekannt, zur Überwachung des Betriebszustandes eines Motors dessen Vibrationen mittels eines Fühlers zu erfassen und eine für den Betrieb des Motors spezifische Information aus der durch einen Referenzwert geteilten Stärke dieser Vibrationen abzuleiten.

Die Aufgabe der Erfindung ist es, Verfahren sowie auch Einrichtungen zur Erfassung des Einspritzvorgangs eines mit einer zwischen einer Öffnungsstellung und einer Schließstellung beweglichen Düsennadel versehenen Kraftstoffinjektors einer Brennkraftmaschine zu schaffen, welche mit geringem Aufwand zu verwirklichen sind und eine zuverlässige Information über den Einspritzvorgang und den Betriebszustand des Kraftstoffinjektors liefern.

Diese Aufgabe wird einerseits durch Verfahren mit den Merkmalen der Ansprüche 1, 2 oder 3 gelöst.

Vorteilhafte Ausführungsformen und Weiterbildungen der erfindungsgemäßen Verfahren sind in den Ansprüchen 4 bis 7 angegeben.

Weiterhin wird die gestellte Aufgabe durch Einrichtungen mit den Merkmalen der Ansprüche 8, 9 oder 10 gelöst.

Vorteilhafte Ausführungsformen und Weiterbildungen der erfindungsgemäßen Einrichtungen sind in den Ansprüchen 11 bis 14 angegeben.

Die Erfindung betrifft Verfahren zur Erfassung des Einspritzvorgangs eines mit einer zwischen einer Öffnungsstellung und einer Schließstellung beweglichen Düsennadel versehenen Kraftstoffinjektors einer Brennkraftmaschine durch Auswertung einer mittels eines Schallsensors aufgenommenen Schallkurve gemäß den unabhängigen Ansprüchen 1, 2 und 3.

Erfindungsgemäß sind bei einem ersten Verfahren die Schritte vorgesehen
- Aufzeichnung eines der Schallkurve entsprechenden Signals über einen den Einspritzvorgang enthaltenden Zeitraum unter Mittelung über eine vorgegebene Anzahl von Einspritzvorgängen;
- Glättung des aufgezeichneten gemittelten Signals;
- Bildung der zeitlichen Ableitung des aufgezeichneten Signals;
- Glättung des zeitlich abgeleiteten Signals;
- Erfassung des globalen Minimums des zeitlich abgeleiteten, geglätteten Signals;
- Erfassung des im Kurvenabschnitt zeitlich vor dem globalen Minimum liegenden globalen Maximums des zeitlich abgeleiteten Signals und Auswertung desselben im Sinne einer Zuordnung zum Anschlagen der Düsennadel bei ihrer Öffnungsbewegung; und
- Erfassung eines im Kurvenabschnitt zeitlich nach dem globalen Minimum liegenden globalen Maximums des geglätteten zeitlich abgeleiteten Signals und Auswertung desselben im Sinne einer Zuordnung zum Anschlagen der Düsennadel am Ende ihrer Schließbewegung.

Gemäß der Erfindung sieht ein zweites Verfahren die erfindungsgemäßen Schritte vor
- Aufzeichnung eines der Schallkurve entsprechenden Signals über einen den Einspritzvorgang enthaltenden Zeitraum unter Mittelung über eine vorgegebene Anzahl von Einspritzvorgängen;
- Glättung des aufgezeichneten gemittelten Signals;
- Bildung der zeitlichen Ableitung des aufgezeichneten Signals;
- Glättung des zeitlich abgeleiteten Signals;
- ein Schritt des Einstellens eines vorgegebenen Schwellwertes B;
- und dass bei der Erfassung des zeitlich ersten Maximums des zeitlich abgeleiteten Signals das im Kurvenabschnitt zeitlich vor dem erstmaligen Unterschreiten des vorgegebenen Schwellwertes B liegende globale Maximum des zeitlich abgeleiteten Signals erfasst wird;
- und dass bei der Erfassung des zeitlich zweiten Maximums des zeitlich abgeleiteten Signals das im Kurvenabschnitt zeitlich nach dem erstmaligen Unterschreiten des vorgegebenen zweiten Schwellwertes liegende globale Maximum des zeitlich abgeleiteten Signals erfasst wird;
- wobei ein Schritt der Erfassung des globalen Minimums des zeitlich abgeleiteten Signals vorgesehen ist; und
- wobei der Schritt des Einstellens des vorgegebenen Schwellwertes B das Einstellen auf einen vorgegebenen prozentualen Anteil des Wertes des erfassten globalen Minimums enthält.

Gemäß der Erfindung sieht ein drittes Verfahren die erfindungsgemäßen Schritte vor
- Aufzeichnung eines der Schallkurve entsprechenden Signals über einen den Einspritzvorgang enthaltenden Zeitraum unter Mittelung über eine vorgegebene Anzahl von Einspritzvorgängen;
- Glättung des aufgezeichneten gemittelten Signals;
- Bildung der zeitlichen Ableitung des aufgezeichneten Signals;
- Glättung des zeitlich abgeleiteten Signals;
- wobei ein Schritt des Einstellens eines vorgegebenen Schwellwertes C vorgesehen ist;
- und wobei bei Erfassung nur eines globalen Maximums des zeitlich abgeleiteten Signals mit einem Wert kleiner als der vorgegebene Schwellwert C dieses globale Maximum im Sinne einer Zuordnung zum Anschlagen der Düsennadel bei Ihrer Schließbewegung ausgewertet wird;
- wobei der Schwellwert C auf einen Wert eingestellt wird, der höher ist, als das Maximum, das dem Einspritzende entspricht, aber niedriger ist, als ein Maximum, das einem Anschlag der Düsennadel im oberen Sitz entsprechen würde.

Gemäß zweckmäßigen Ausgestaltungen der Verfahren
wird zur Feststellung des Einspritzbeginns das aufgezeichnete Signal mit einem vorgegebenen Schwellwert A verglichen, und die Stelle, an der der Schwellwert zum ersten Mal überschritten wird, wird als Einspritzbeginn angenommen.

Weiterhin wird das aufgezeichnete Signal einer Betragbildung unterzogen.

Weiterhin erfolgt das Aufzeichnen des der Schallkurve entsprechenden Signals unter Mittelung durch phasenkorrekte Stapelung des Signals über eine vorgegebene Anzahl n von Einspritzvorgängen.

Weiterhin ist die Anzahl n der Schwingungsvorgänge, über die das aufgezeichnete Signal gemittelt wird, einstellbar.

Die Erfindung betrifft außerdem Einrichtungen zur Erfassung des Einspritzvorgangs eines mit einer zwischen einer Öffnungsstellung und einer Schließstellung beweglichen Düsennadel versehenen Kraftstoffinjektors einer Brennkraftmaschine durch Auswertung einer mittels eines Schallsensors aufgenommenen Schallkurve in einer Auswerteeinrichtung gemäß den unabhängigen Ansprüchen 8, 9 und 10.

Gemäß einer ersten Einrichtung ist erfindungsgemäß eine Auswertevorrichtung vorgesehen zur
- Aufzeichnung eines der Schallkurve entsprechenden Signals über einen den Einspritzvorgang enthaltenden Zeitraum unter Mittelung über eine vorgegebene Anzahl von Einspritzvorgängen;
- Glättung des aufgezeichneten gemittelten Signals;
- Bildung der zeitlichen Ableitung des aufgezeichneten geglätteten Signals;
- Glättung des zeitlich abgeleiteten Signals;
- Erfassung des globalen Minimums des geglätteten zeitlich abgeleiteten Signals;
- Erfassung des im Kurvenabschnitt zeitlich vor dem globalen Minimum liegenden globalen Maximums des zeitlich abgeleiteten Signals und Auswertung desselben im Sinne einer Zuordnung zum Anschlagen der Düsennadel am Ende ihrer Öffnungsbewegung; und
- Erfassung eines im Kurvenabschnitt zeitlich nach dem globalen Minimum liegenden globalen Maximums des zeitlich abgeleiteten Signals und Auswertung desselben im Sinne einer Zuordnung zum Anschlagen der Düsennadel am Ende ihrer Schließbewegung.

Gemäß einer zweiten Einrichtung ist erfindungsgemäß eine Auswertevorrichtung vorgesehen zur
- Aufzeichnung eines der Schallkurve entsprechenden Signals über einen den Einspritzvorgang enthaltenden Zeitraum unter Mittelung über eine vorgegebene Anzahl von Einspritzvorgängen;
- Glättung des aufgezeichneten gemittelten Signals;
- Bildung der zeitlichen Ableitung des aufgezeichneten Signals;
- Glättung des zeitlich abgeleiteten Signals;
- ein Schritt des Einstellens eines vorgegebenen Schwellwertes B;
- zur Erfassung des im Kurvenabschnitt zeitlich vor dem erstmaligen Unterschreiten des vorgegebenen Schwellwertes B liegenden globalen Maximums des zeitlich abgeleiteten Signals als erstes Maximum;
- zur Erfassung des im Kurvenabschnitt zeitlich nach dem erstmaligen Unterschreiten des vorgegebenen Schwellwertes B liegende globale Maximum des zeitlich abgeleiteten Signals als zweites Maximum;
- und zur Erfassung des globalen Minimums des zeitlich abgeleiteten Signals;
- wobei das Einstellen des vorgegebenen Schwellwertes B ein Einstellen auf einen vorgegebenen prozentualen Anteil des Wertes des erfassten globalen Minimums enthält.

Gemäß einer dritten Einrichtung ist erfindungsgemäß eine Auswertevorrichtung vorgesehen zur
- Aufzeichnung eines der Schallkurve entsprechenden Signals über einen den Einspritzvorgang enthaltenden Zeitraum unter Mittelung über eine vorgegebene Anzahl von Einspritzvorgängen;
- Glättung des aufgezeichneten gemittelten Signals;
- Bildung der zeitlichen Ableitung des aufgezeichneten Signals;
- Glättung des zeitlich abgeleiteten Signals;
- und zum Einstellen eines vorgegebenen Schwellwertes C;
- und bei Erfassung nur eines globalen Maximums des zeitlich abgeleiteten Signals mit einem Wert kleiner als der vorgegebene Schwellwert C zur Auswertung dieses globalen Maximums im Sinne einer Zuordnung zum Anschlagen der Düsennadel bei Ihrer Schließbewegung;
- wobei der Schwellwert C auf einen Wert eingestellt wird, der höher ist, als das Maximum, das dem Einspritzende entspricht, aber niedriger als ein Maximum ist, das einem Anschlag der Düsennadel im oberen Sitz entsprechen würde.

Gemäß einer zweckmäßigen Ausgestaltung ist zur Feststellung des Einspritzbeginns die Auswerteeinrichtung für einen Vergleich des aufgezeichneten Signals mit einem vorgegebenen Schwellwert A und zur Auswertung der Stelle, an der der Schwellwert zum ersten Mal überschritten wird, als Einspritzbeginn, vorgesehen.

Weiterhin ist es zweckmäßig, dass die Auswerteeinrichtung zur Betragsbildung des aufgezeichneten Signals vorgesehen ist.

Weiterhin kann die Auswerteeinrichtung zur Mittelung des der Schallkurve entsprechenden aufgezeichneten Signals durch phasenkorrekte Stapelung des Signals über eine vorgegebene Anzahl n von Einspritzvorgängen vorgesehen sein.

Weiterhin kann die Auswerteeinrichtung zur Einstellung der Anzahl n der Einspritzvorgänge, über die das aufgezeichnete Signal gemittelt wird, vorgesehen sein.

Gemäß einer anderen bevorzugten Ausführungsform der erfindungsgemäßen Einrichtung ist die Auswerteeinrichtung vorgesehen
- zum Einstellen eines vorgegebenen zweiten Schwellwertes;
- zur Erfassung des zeitlich vor dem erstmaligen Unterschreiten des vorgegebenen zweiten Schwellwertes liegenden globalen Maximums des zeitlich abgeleiteten Signals als zeitlich erstes Maximum;
- und zur Erfassung des zeitlich nach dem erstmaligen Unterschreiten des vorgegebenen zweiten Schwellwertes liegenden globalen Maximums des zeitlich abgeleiteten Signals als zeitlich zweites Maximum.

Hierbei kann die Auswerteeinrichtung vorgesehen sein
- zur Erfassung des globalen Minimums des zeitlich abgeleiteten Signals; und
- zum Einstellen des vorgegebenen zweiten Schwellwertes auf einen vorgegebenen prozentualen Anteil des Wertes des erfassten globalen Minimums.

Gemäß einer anderen bevorzugten Ausführungsform der erfindungsgemäßen Einrichtung ist die Auswerteeinrichtung vorgesehen
- zum Einstellen eines vorgegebenen dritten Schwellwertes;
- und bei Erfassung nur eines globalen Maximums des zeitlich abgeleiteten Signals mit einem Wert kleiner als der vorgegebene dritte Schwellwert zur Auswertung dieses globalen Maximums im Sinne einer Zuordnung zum Anschlagen der Düsennadel bei Ihrer Schließbewegung.

Gemäß einer anderen bevorzugten Ausführungsform der erfindungsgemäßen Einrichtung ist die Auswerteeinrichtung zur Glättung des aufgezeichneten Signals vor der Bildung der zeitlichen Ableitung vorgesehen.

Gemäß einer bevorzugten Ausführungsform der erfindungsgemäßen Einrichtung ist die Auswerteeinrichtung zur Glättung des zeitlich abgeleiteten Signals vorgesehen.

Gemäß noch einer bevorzugten Ausführungsform der erfindungsgemäßen Einrichtung ist die Auswerteeinrichtung zur Mittelung des der Schallkurve entsprechenden aufgezeichneten Signals durch phasenkorrekte Stapelung des Signals über eine vorgegebene Anzahl n von Einspritzvorgängen vorgesehen.

Vorzugsweise die Auswerteeinrichtung zur Einstellung der Anzahl n der Einspritzvorgänge, über die das aufgezeichnete Signal gemittelt wird, vorgesehen.

Gemäß einer derzeit besonders bevorzugten Ausführungsform der Erfindung wird eine Einrichtung zur Erfassung des Einspritzvorgangs eines mit einer zwischen einer Öffnungsstellung und einer Schließstellung beweglichen Düsennadel versehenen Kraftstoffinjektors einer Brennkraftmaschine durch Auswertung einer mittels eines Schallsensors aufgenommenen Schallkurve in einer Auswerteeinrichtung geschaffen, dadurch gekennzeichnet, dass die Auswerteeinrichtung vorgesehen ist zur
- Aufzeichnung eines der Schallkurve entsprechenden Signals über einen den Einspritzvorgang enthaltenden Zeitraum unter Mittelung einer vorgegebene Anzahl von Einspritzvorgängen und Betragsbildung des aufgezeichneten Signals;
- Glättung des aufgezeichneten gemittelten Signals;
- Bildung der zeitlichen Ableitung des aufgezeichneten geglätteten Signals;
- Glättung des zeitlich abgeleiteten Signals;
- Erfassung des globalen Minimums des geglätteten zeitlich abgeleiteten Signals;
- Erfassung des zeitlich vor dem globalen Minimum liegenden globalen Maximums des zeitlich abgeleiteten Signals und Auswertung desselben im Sinne einer Zuordnung zum Anschlagen der Düsennadel am Ende ihrer Öffnungsbewegung; und
- Erfassung eines zeitlich nach dem globalen Minimum liegenden globalen Maximums des zeitlich abgeleiteten Signals und Auswertung desselben im Sinne einer Zuordnung zum Anschlagen der Düsennadel am Ende ihrer Schließbewegung.

Gemäß einer anderen derzeit besonders bevorzugten Ausführungsform der Erfindung wird Einrichtung zur Erfassung des Einspritzvorgangs eines mit einer zwischen einer Öffnungsstellung und einer Schließstellung beweglichen Düsennadel versehenen Kraftstoffinjektors einer Brennkraftmaschine durch Auswertung einer mittels eines Schallsensors aufgenommenen Schallkurve in einer Auswerteeinrichtung geschaffen, dadurch gekennzeichnet, dass die Auswerteeinrichtung vorgesehen ist zur
- Aufzeichnung eines der Schallkurve entsprechenden Signals über einen den Einspritzvorgang enthaltenden Zeitraum unter Mittelung über einer vorgegebene Anzahl von Einspritzvorgängen und Betragsbildung des aufgezeichneten Signals;
- Glättung des aufgezeichneten gemittelten Signals;
- Bildung der zeitlichen Ableitung des aufgezeichneten Signals;
- Glättung des zeitlich abgeleiteten Signals;
- ein Schritt des Einstellens eines vorgegebenen zweiten Schwellwertes;
- zur Erfassung des zeitlich vor dem erstmaligen Unterschreiten des vorgegebenen zweiten Schwellwertes liegenden globalen Maximums des zeitlich abgeleiteten Signals als erstes Maximum;
- zur Erfassung des zeitlich nach dem erstmaligen Unterschreiten des vorgegebenen zweiten Schwellwertes liegende globale Maximum des zeitlich abgeleiteten Signals als zweites Maximum;
- und zur Erfassung des globalen Minimums des zeitlich abgeleiteten Signals;
- wobei das Einstellen des vorgegebenen zweiten Schwellwertes ein Einstellen auf einen vorgegebenen prozentualen Anteil des Wertes des erfassten globalen Minimums enthält.

Gemäß noch einer anderen derzeit besonders bevorzugten Ausführungsform der Erfindung wird Einrichtung zur Erfassung des Einspritzvorgangs eines mit einer zwischen einer Öffnungsstellung und einer Schließstellung beweglichen Düsennadel versehenen Kraftstoffinjektors einer Brennkraftmaschine durch Auswertung einer mittels eines Schallsensors aufgenommenen Schallkurve in einer Auswerteeinrichtung geschaffen, dadurch gekennzeichnet, dass die Auswerteeinrichtung vorgesehen ist zur
- Aufzeichnung eines der Schallkurve entsprechenden Signals über einen den Einspritzvorgang enthaltenden Zeitraum unter Mittelung über einer vorgegebene Anzahl von Einspritzvorgängen und Betragsbildung des aufgezeichneten Signals;
- Glättung des aufgezeichneten gemittelten Signals;
- Bildung der zeitlichen Ableitung des aufgezeichneten Signals;
- Glättung des zeitlich abgeleiteten Signals;
- und zum Einstellen eines vorgegebenen dritten Schwellwertes;
- und bei Erfassung nur eines globalen Maximums des zeitlich abgeleiteten Signals mit einem Wert kleiner als der vorgegebene dritte Schwellwert zur Auswertung dieses globalen Maximums im Sinne einer Zuordnung zum Anschlagen der Düsennadel bei Ihrer Schließbewegung.

Im folgenden werden Ausführungsbeispiele der Erfindung anhand der Zeichnung erläutert.

Es zeigt:
Figur 1 eine etwas schematisierte Darstellung eines Kraftstoffinjektors einer Brennkraftmaschine, an welchem ein Klopfsensor zur Aufnahme einer Schallkurve vorgesehen ist, die den Einspritzvorgang des Kraftstoffinjektors und die Bewegung der in dem Kraftstoffinjektor enthaltenen Düsennadel wiedergibt, wie sie gemäß Ausführungsbeispielen der Erfindung ausgewertet wird;
Figur 2 ein Zeitdiagramm, welches den Ankerstangenhub, den Einspritzverlauf und die gemessene Schallkurve während eines Einspritzvorgangs eines Kraftstoffinjektors wiedergibt, gemäß einem ersten Ausführungsbeispiel der Erfindung;
Figur 3 ein Zeitdiagramm, welches die aufgezeichnete Schallkurve des Sensors gemäß dem ersten Ausführungsbeispiel der Erfindung wiedergibt;
Figur 4 ein Zeitdiagramm, welches das aufgezeichnete Signal von Figur 3 nach Betragsbildung gemäß dem ersten Ausführungsbeispiel der Erfindung wiedergibt;
Figur 5 ein Zeitdiagramm, welches das aufgezeichnete Signal nach Betragsbildung, wie es in Figur 4 gezeigt ist, nach einer ersten Glättung gemäß dem ersten Ausführungsbeispiel der Erfindung wiedergibt;
Figur 6 ein Zeitdiagramm, welches das geglättete Signal von Figur 5 nach zeitlicher Ableitung gemäß dem ersten Ausführungsbeispiel der Erfindung wiedergibt;
Figur 7 ein Zeitdiagramm, welches das zeitlich abgeleitete Signal von Figur 6 nach einer zweiten Glättung gemäß dem ersten Ausführungsbeispiel der Erfindung wiedergibt;
Figuren 8a) bis c) ein Flussdiagramm, welches den Ablauf bei der Verarbeitung der Schallkurve gemäß dem ersten Ausführungsbeispiel der Erfindung wiedergibt;
Figur 9 und 10 jeweils ein Zeitdiagramm, welches ein zeitlich abgeleitetes Signal ähnlich Figur 7 nach einer zweiten Glättung gemäß einem zweiten Ausführungsbeispiel der Erfindung wiedergibt; und
Figur 11 ein Zeitdiagramm, welches ein zeitlich abgeleitetes Signal ähnlich Figur 7 nach einer zweiten Glättung gemäß einem dritten Ausführungsbeispiel der Erfindung wiedergibt.

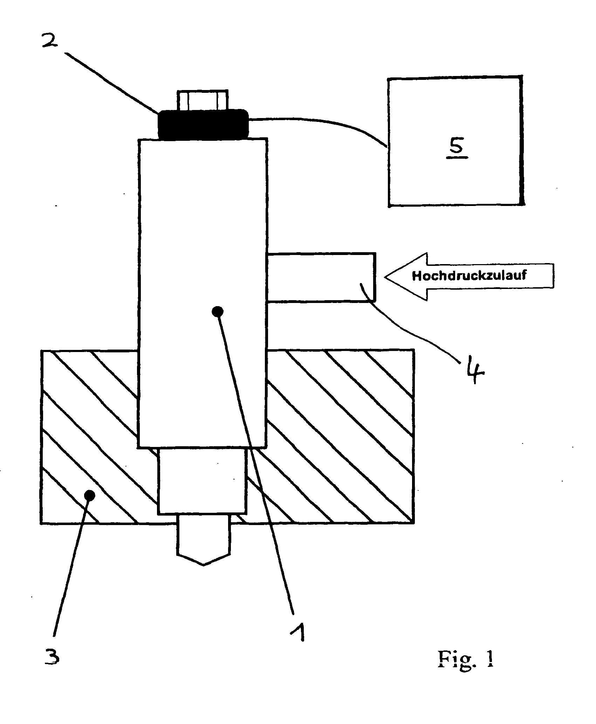

In Figur 1 ist ein Kraftstoffinjektor 1 gezeigt, welcher im Zylinderblock 3 einer Brennkraftmaschine vorgesehen ist. Dem Kraftstoffinjektor 1 wird von einem Hochdruckzulauf 4 unter hohem Druck vorgehaltener Kraftstoff zugeführt, der in allgemein bekannter Weise mittels eines Nadelventils, das durch eine zwischen einer Öffnungsstellung und einer Schließstellung beweglichen Düsennadel geöffnet und geschlossen wird, in den Brennraum der Brennkraftmaschine einspritzbar ist. Das Öffnen und Schließen der Düsennadel wird mittels einer elektromechanisch betätigten Ankerstange des Kraftstoffinjektors gesteuert.

An dem Kraftstoffinjektor 1 ist ein Schallsensor 2 in Form eines Klopfsensors vorgesehen, welcher dazu dient, eine den Einspritzvorgang und die Bewegung der Düsennadel in dem Kraftstoffinjektor repräsentierende Schallkurve aufzunehmen. Der Schallsensor 2 ist bei dem hier beschriebenen Ausführungsbeispiel ein Beschleunigungsaufnehmer, wie er als Klopfsensor bei Brennkraftmaschinen üblich ist. Es können jedoch auch andere Einrichtungen verwendet werden, die geeignet sind, eine Schallkurve oder eine die an dem Kraftstoffinjektor auftretenden mechanischen Schwingungen wiedergebende Signalkurve zu erfassen und ein entsprechendes Signal zu geben. Das von dem Schallsensor 2 abgegebene Signal wird zur weiteren Verarbeitung einer lediglich schematisch angedeuteten Auswerte- oder Verarbeitungsschaltung 5 zugeführt.

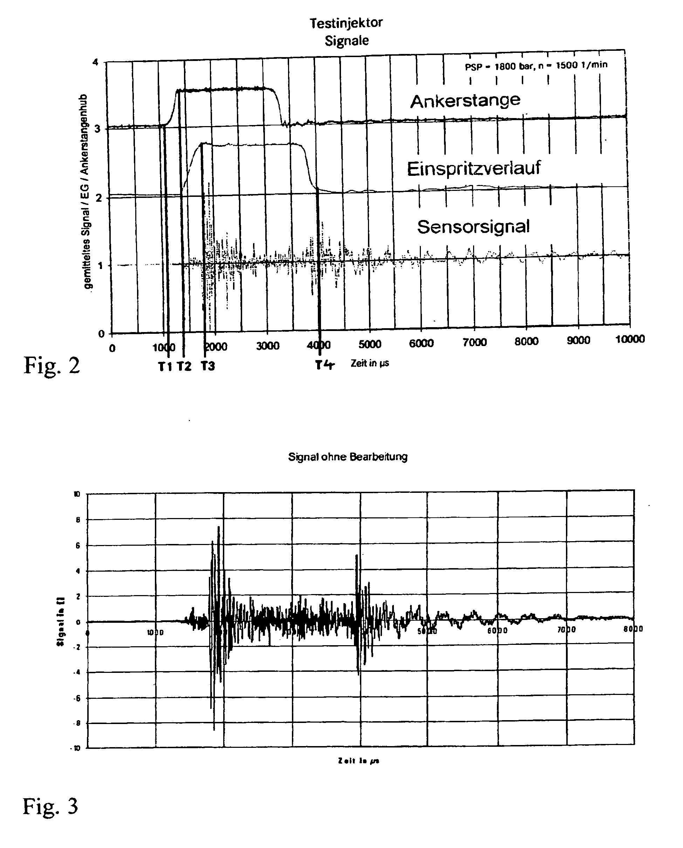

Das in Figur 2 dargestellte Zeitdiagramm zeigt in der oberen Kurve die Bewegung der die Düsennadel des Kraftstoffinjektors 1 steuernden Ankerstange, in der mittleren Kurve den gemessenen Einspritzverlauf des Kraftstoffinjektors und schließlich in der unteren Kurve das von dem Schallsensor 2 gemessene, der Schallkurve entsprechende Sensorsignal.

Wie ersichtlich ist, kann mit Beginn der Ankerbewegung zum Zeitpunkt T1 am Sensor 2 ein geringes, jedoch von Null verschiedenes Signal gemessen werden, welches an Intensität gewinnt, sobald der Anker zum Zeitpunkt T2 an seiner oberen Begrenzung anschlägt. Ungefähr ab diesem Zeitpunkt addiert sich im Sensorsignal ein Anteil, der seine Ursache im Anströmen des Kraftstoffs hat. Zum Zeitpunkt T3 schlägt die Düsennadel mit ihrer relativ großen Masse und hoher Geschwindigkeit, d.h. mit einem großen Impuls, in den oberen Sitz. Das Resultat ist ein starkes Sensorsignal zum Zeitpunkt T3. Zum Zeitpunkt T4 schlägt die Düsennadel am Ende des Einspritzvorgangs wieder in ihrem unteren Sitz an, was ebenfalls mit einem großen Impuls verbunden ist, der sich deutlich im Sensorsignal niederschlägt. Mit dem Anschlagen der Düsennadel im Sitz ist der Einspritzvorgang beendet, wie die mittlere Kurve zeigt.

Figur 3 zeigt nochmals isoliert ein Signal des Schallsensors 2 vor Bearbeitung ähnlich der unteren Kurve in Figur 2. Man sieht deutlich die starke Erhöhung der Amplituden am Beginn und am Ende des Einspritzvorgangs, die dem Anschlagen der Düsennadel am Ende der Öffnungsbewegung bzw. am Ende der Schließbewegung entsprechen. Auf Grund verschiedener Schwingungsphänomene ist das Signal jedoch in Zeitrichtung "verschmiert", so dass eine genaue Auswertung noch nicht möglich ist.

Das erfindungsgemäße Verfahren und die erfindungsgemäße Auswerteeinrichtung 5 sieht es gemäß dem hier beschriebenen Ausführungsbeispiel vor, dass zunächst eine mehrfache Aufzeichnung der Schallkurve unter phasenkorrekter zeitlicher Lage im Sinne einer Mittelung über eine entsprechende Anzahl von Einspritzvorgängen vorgenommen wird, die bereits in Figur 3 berücksichtigt ist. Durch diese Stapelung von Signalen sollen in ihrer Phase nicht korrelierte zufällige oder Rauschanteile herausgemittelt werden, so dass im wesentlichen nur noch die sich stets bei jedem Einspritzvorgang wiederholenden Signalkomponenten enthalten sind.

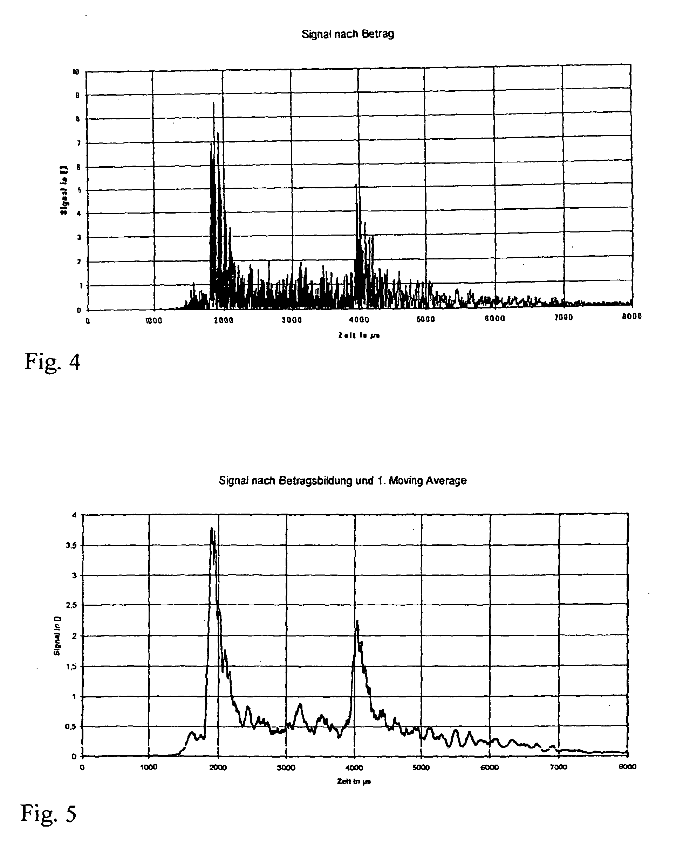

Als nächstes wird das in Figur 3 gezeigte Signal einer Betragsbildung unterzogen, deren Ergebnis in Figur 4 zu sehen ist. Anstelle der in Figur 4 gezeigten Betragsbildung, welche definitionsgemäß die positiven und an der Abszisse gespiegelten negativen Amplituden des in Figur 3 gezeigten Signals umfasst, könnte auch eine Weiterverarbeitung beispielsweise nur der positiven Amplituden des in Figur 3 gezeigten Signals oder des quadrierten Signals von Figur 3 herangezogen werden.

Danach wird das Signal einer ersten Glättung unterzogen, deren Ergebnis in Figur 5 zu sehen ist. Dieses nach Betragsbildung geglättete Signal lässt nun bereits die dem Anschlagen der Düsennadel am Ende ihrer Öffnungsbewegung bzw. ihrer Schließbewegung entsprechenden Amplitudenspitzen deutlich erkennen.

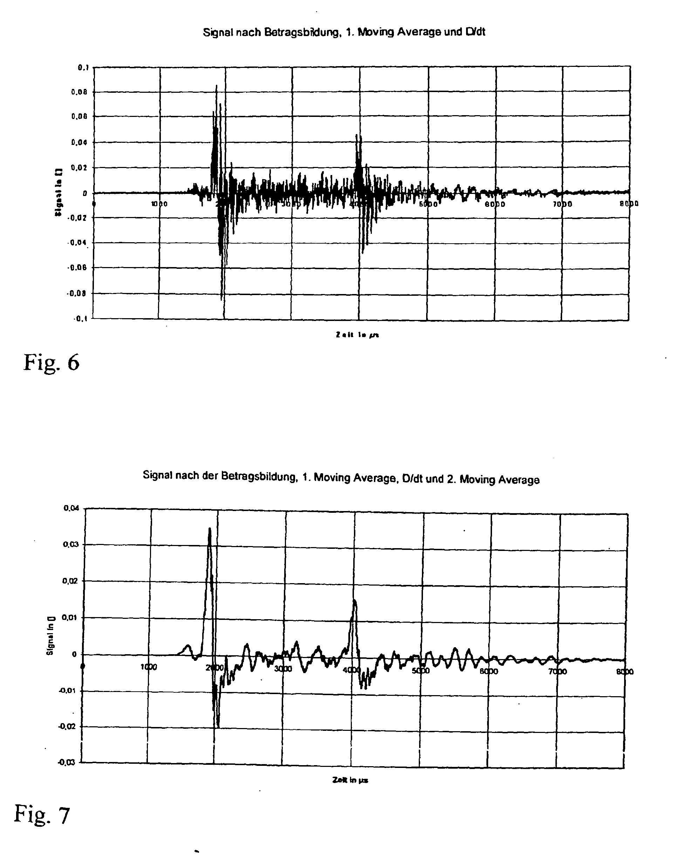

Das geglättete Signal wird dann zeitlich abgeleitet, wovon das Resultat in Figur 6 dargestellt ist.

Eine weitere Glättung des in Figur 6 gezeigten zeitlich abgeleiteten Signals liefert dann die in Figur 7 dargestellte Signalform, welche zwei Maxima enthält, die dem Anschlagen der Düsennadel am Ende ihrer Öffnungs- bzw. Schließbewegung entsprechen und die durch ein globales Minimum kurz nach dem ersten Maximum voneinander getrennt sind. Das globale Minimum kann als momentane Beruhigung während der Öffnungsbewegung der Düsennnadel interpretiert werden. Diese Kurvenform ist besonders gut geeignet für eine automatische Abarbeitung des Signals zur Feststellung der den beiden genannten Anschlagzeitpunkten der Düsennadel entsprechenden Hauptamplitudenspitzen. Das dem Anschlagen der Düsennadel am Ende der Öffnungsbewegung entsprechende Maximum ist vor dem globalen Minimum zu suchen, während das dem Anschlagen der Düsennadel am Ende der Schließbewegung entsprechende Amplitudenmaximum nach diesem Minimum zu suchen ist.

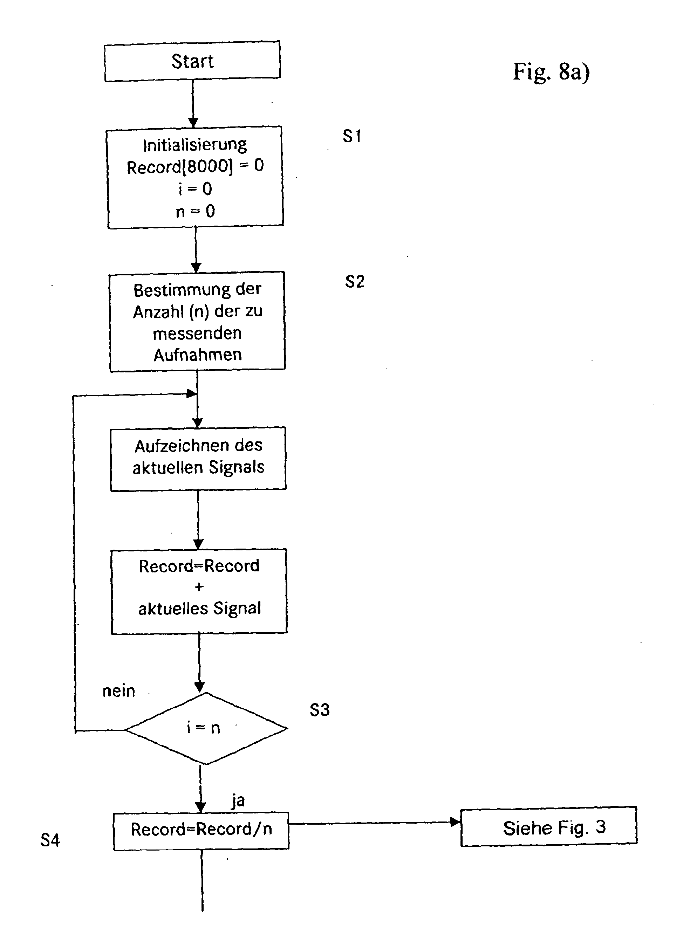

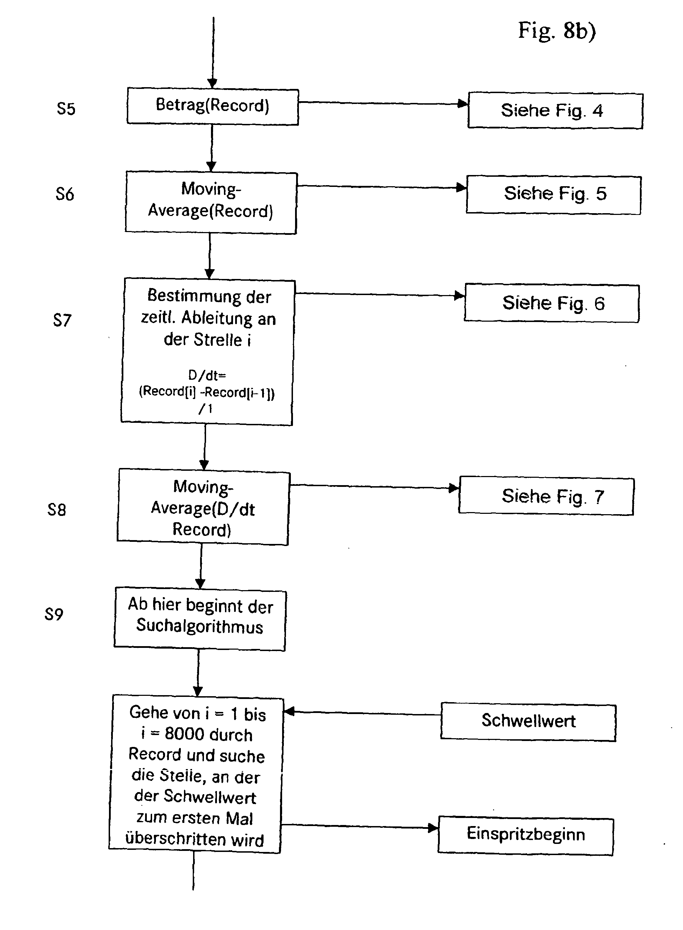

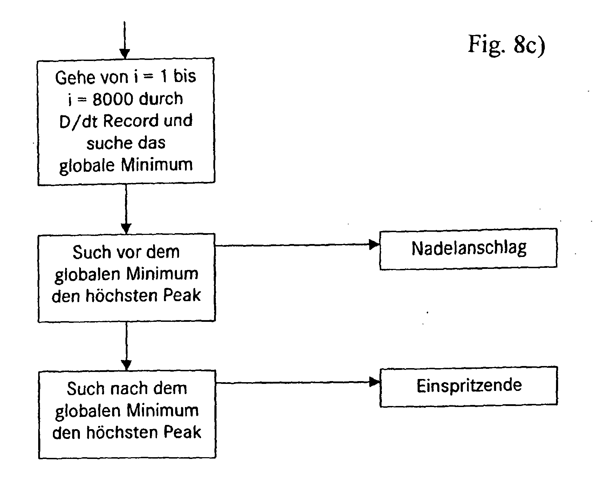

Die Figuren 8a) bis 8c) zeigen einen Ablaufplan zur Durchführung eines Verfahrens zur Erfassung des Einspritzvorgangs des Kraftstoffinjektors 1 mittels der Verarbeitungsschaltung 5, wie schematisch in Figur 1 dargestellt, gemäß einem derzeit besonders bevorzugten Ausführungsbeispiel der Erfindung.

Zunächst erfolgt in Schritt S1 eine Initialisierung der Variablen. "Record" bedeutet ein Array zur Speicherung des aufgezeichneten Signals, hier mit einer Anzahl von 8000 Abtastpunkten; i bedeutet einen Schleifenindex, n die Anzahl der Messungen, die zur Mittelwertbildung herangezogen werden.

In Schritt S2 wird die Anzahl n der zur Mittelwertbildung herangezogenen Messungen festgesetzt.

In der insgesamt mit S3 bezeichneten Programmschleife erfolgt das Aufzeichnen des aktuellen Signals unter Stapelung einer dem vorher gewählten Wert n entsprechenden Anzahl von Einzelmessungen.

Wenn die vorgegebene Anzahl erreicht ist, d.h. i = n, dann wird in Programmschritt S4 der Inhalt jeder Speicherzelle des Arrays "Record" durch die Anzahl der gemessenen Aufnahmen geteilt, um einen normierten Wert zu erhalten. Das Ergebnis ist das aufgezeichnete Signal, welches in Figur 3 gezeigt ist.

In einem weiteren Programmschritt S5 erfolgt die Betragsbildung des aufgezeichneten gemittelten Signals, wovon das Ergebnis in Figur 4 zu sehen ist.

Eine danach vorgenommene Glättung mittels einer vorgegebenen, hier nicht näher beschriebenen Faltungsfunktion üblicher Art, die im folgenden Programmschritt S6 vorgenommen wird, liefert das in Figur 5 gezeigte geglättete Signal.

Dann wird in einem Programmschritt S7 die zeitliche Ableitung des geglätteten Signals von Figur 5 gebildet, wovon das Ergebnis in Figur 6 zu sehen ist.

Dieses zeitlich abgeleitete Signal wird dann einer nochmaligen Glättung unterzogen, Programmschritt 8, wovon das Ergebnis in Figur 7 zu sehen ist.

Im Programmschritt S9 beginnt ein Suchalgorithmus, welcher darauf ausgerichtet ist, den Einspritzbeginn, das Anschlagen der Düsennadel am Ende des Öffnungsvorgangs und das Einspritzende, welches hier als mit dem Anschlagen der Düsennadel am Ende des Schließvorgangs zusammenfallend angesehen wird, zu finden.

Zunächst wird zur Feststellung des Einspritzbeginns das aufgezeichnete Signal mit einem Schwellwert verglichen, die Stelle, an der der Schwellwert zum ersten Mal überschritten wird, wird als Einspritzbeginn angenommen, entsprechend dem Zeitpunkt T2 in Figur 2

Sodann wird das in Figur 7 ersichtliche globale Minimum gesucht, was im folgenden Programmschritt dargestellt ist. Als nächstes wird der Peak, also der höchste Amplitudenwert vor diesem globalen Minimum gesucht und als Anschlagen der Düsennadel am Ende der Öffnungsbewegung identifiziert, wie er zum Zeitpunkt T3 in Figur 2 dargestellt ist. Schließlich wird nach diesem besagten globalen Minimum der maximale Amplitudenwert gesucht, welcher dem Einspritzende zuzuordnen ist, entsprechend dem Anschlagen der Düsennadel in ihrer Schließstellung, was in Figur 2 zum Zeitpunkt T4 dargestellt ist. Damit ist dieser Vorgang beendet.

Allein aus der Schallkurve, wie sie in Figur 3 zu sehen ist, die in Figur 2 identifizierten Zeitpunkte zu bestimmen, ist mit großen Schwierigkeiten verbunden, da das Anschlagen der Düsennadel, beispielsweise in ihrem oberen Sitz, nicht zu einem spezifischen, dominanten Impuls führt. Das Schließen der Düsennadel führt ebenfalls nicht zu einem gleich großen Impuls wie das Anschlagen der Nadel im oberen Sitz. Betrachtet man jedoch die geglättete zeitliche Ableitung, wie sie in Figur 7 dargestellt ist, so sind die Nadelanschläge als deutliche Peaks, als Amplitudenspitzen, zu erkennen. Um das Anschlagen der Düsennadel am Ende ihrer Öffnungsbewegung und das mit dem Einspritzende zusammenfallende Anschlagen der Düsennadel am Ende ihrer Schließbewegung zu bestimmen, sucht man die zwei höchsten Peaks im abgeleiteten Signal. Der Einspritzbeginn kann als der Zeitpunkt bestimmt werden, an dem ein gewisser Schwellwert im Zeitsignal überschritten wird, vergleiche den Zeitpunkt T2 in Figur 2.

In der Praxis hat sich gezeigt, dass in Schallkurven mancher Kraftstoffinjektoren oder in Schallkurven bei bestimmten Betriebsbedingungen kurz nach dem ersten großen Peak, welcher dem Anschlagen beim Öffnen der Düsennadel entspricht, ein zweiter entsteht, der mit seiner Amplitude höher liegt als der Peak am Einspritzende. Damit dieser Fall umgangen werden kann, wird gemäß dem vorliegenden Ausführungsbeispiel das globale Minimum des abgeleiteten Signals bestimmt und erst der danach gefundene Peak als Anschlagen der Düsennadel beim Schließen am Ende des Einspritzvorgangs bestimmt.

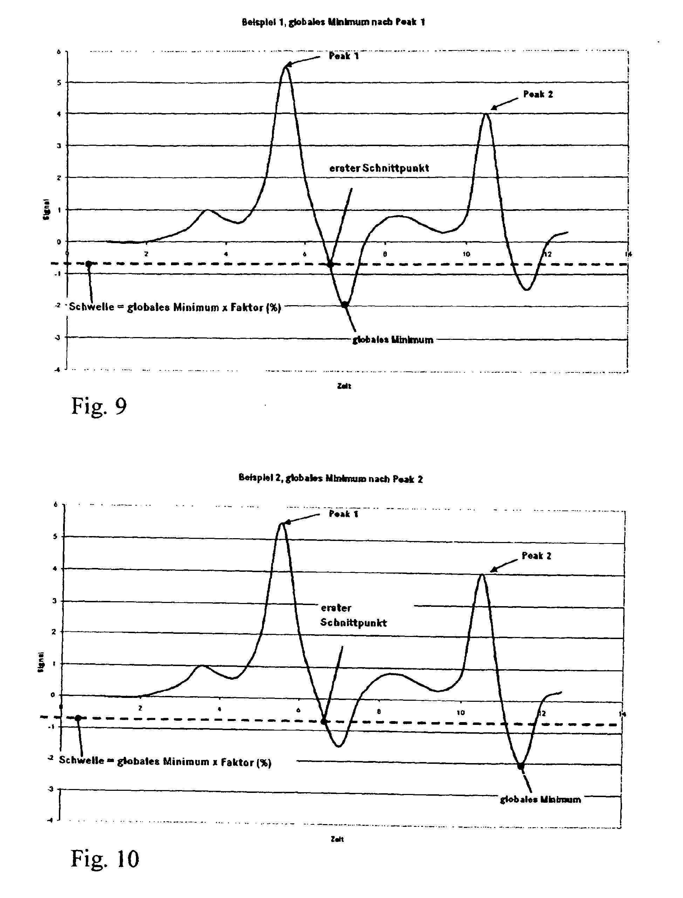

Anhand der Figuren 9 und 10, die das zeitlich abgeleitete und einer deutlichen Glättung und gegebenenfalls noch weiteren Verarbeitungsvorgängen unterzogene Ausgangssignal des Schallsensors ähnlich dem in Figur 7 dargestellten Signal zeigen, soll nun ein zweites Ausführungsbeispiel der Erfindung beschrieben werden.

Bei dem vorher beschriebenen ersten Ausführungsbeispiel wurde vor bzw. nach dem globalen Minimum nach dem das Anschlagen der Nadel im oberen Sitz anzeigenden ersten Maximum und nach dem das Anschlagen der Nadel im unteren Sitz anzeigenden zweiten Maximum gesucht. Gemäß dem hier beschriebenen zweiten Ausführungsbeispiel werden diese beiden Maxima dagegen nicht vor bzw. nach dem globalen Minimum, sondern vor bzw. nach einem Zeitpunkt gesucht, zu dem die Kurve einen vorgegebenen Schwellwert, der einem bestimmten vorgegebenen prozentualen Teil des Wertes des globalen Minimums entspricht, schneidet, gesucht.

In den Figuren 9 und 10 bedeutet die horizontale gestrichelte Linie diese Schwelle, Schwelle = globales Minimum x Faktor (%). Das erste Maximum, Peak 1, wird vor dem Schnittpunkt der Kurve mit dieser Schwelle gesucht, das zweite Maximum nach diesem Schnittpunkt. Durch dieses Vorgehen werden die Maxima auch dann noch korrekt gefunden, wenn aufgrund bestimmter Eigenheiten (Montagefehler oder bestimmte Charakteristiken des Injektors wie ein sehr schnelles Schließen) das globale Minimum nicht zwischen den beiden gesuchten Maxima liegt, sondern nach dem zweiten Maximum, wie in Figur 10 gezeigt. Wenn der Faktor des Schwellwerts auf 100% des globalen Minimums gesetzt wird, dann ergibt sich eine art der suche nach den beiden genannten Maxima entsprechend dem ersten Ausführungsbeispiel.

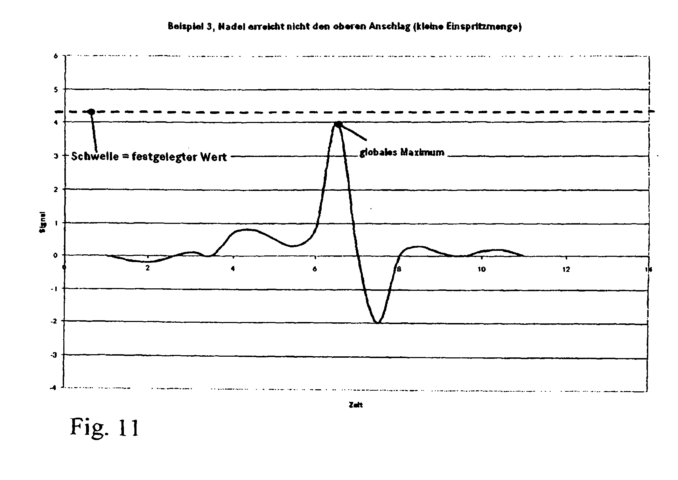

Anhand der Figur 11, die wiederum ein zeitlich abgeleitetes und einer deutlichen Glättung und gegebenenfalls noch weiteren Verarbeitungsvorgängen unterzogenes Ausgangssignal des Schallsensors ähnlich dem in Figur 7 bzw. in den Figuren 9 und 10 dargestellten Signal zeigt, soll nun schließlich ein drittes Ausführungsbeispiel der Erfindung beschrieben werden.

Für den Fall, dass von dem Injektor nur sehr kleine Einspritzmengen abgegeben werden sollen, erreicht die Düsennadel bei ihrer Öffnungsbewegung aufgrund der Kürze des dann erfolgenden Einspritzvorgangs gar nicht ihren der vollständigen Öffnung entsprechenden oberen Anschlag, sondern kehrt bereits in der sogenannten ballistischen Phase der Nadelbewegung um. Infolgedessen gibt es nur ein charakteristisches Maximum (globales Maximum), das dem bisher beschriebenen zweiten Maximum beim Anschlagen der Düsennadel im unteren Sitz am Ende ihrer Schließbewegung entspricht. Das dem Anschlagen der Düsennadel im oberen Sitz am Ende ihrer Öffnungsbewegung entsprechende Maximum, das bisher beschrieben erste Maximum, gibt es aus dem vorher beschriebenen Grund nicht.

Damit auch dieser Fall mit ausreichender Sicherheit korrekt erkannt werden kann, wird eine weitere Schwelle, ein dritter vorgegebener Schwellwert, gesetzt, der im oberen Bereich der Kurve liegt. Liegen alle Werte der Kurve, also auch die der Maxima, unter diesem Schwellwert, wird das dann zu findende globale Maximum als Einspritzende gewertet, entsprechend dem Anschlagen der Düsennadel im unteren Sitz am Ende ihrer Schließbewegung. Der Grund ist, dass das erste Maximum, welches das Anschlagen der Düsennadel am oberen Anschlag am Ende ihrer Öffnungsbewegung anzeigt, typischerweise größer ist als das das Ende der Schließbewegung anzeigende zweite Maximum. Wenn nun die besagte dritte Schwelle so gesetzt wird, dass sie höher liegt als das zweite Maximum, aber niedriger als das erste Maximum, kann damit das Wegfallen des ersten Maximums, entsprechend einer Umkehr der Nadelbewegung noch in der ballistischen Phase, eindeutig diskriminiert werden. Wenn dagegen Werte festgestellt werden, die höher als die Schwelle liegen, ist davon auszugehen, das diese dem ersten Maximum, entsprechend einem Anschlagen der Nadel im oberen Sitz am Ende ihrer Öffnungsbewegung zuzuordnen sind und es erfolgt dann eine Auswertung mit dem Ziel, beide Maxima zu finden, beispielsweise wie es anhand der ersten beiden Ausführungsbeispiele beschrieben worden ist.

Die Auswerteeinrichtung 5 kann, an sich bekannt, durch einen programmgesteuerten Mikroprozessor oder, bei einem stationären Prüfstand, durch einen herkömmlichen Computer gebildet sein.

## Patentansprüche

1. Verfahren zur Erfassung des Einspritzvorgangs eines mit einer zwischen einer Öffnungsstellung und einer Schließstellung beweglichen Düsennadel versehenen Kraftstoffinjektors (1) einer Brennkraftmaschine durch Auswertung einer mittels eines Schallsensors (2) aufgenommenen Schallkurve,
**gekennzeichnet durch** die Schritte
- Aufzeichnung eines der Schallkurve entsprechenden Signals über einen den Einspritzvorgang enthaltenden Zeitraum unter Mittelung über eine vorgegebene Anzahl von Einspritzvorgängen;
- Glättung des aufgezeichneten gemittelten Signals;
- Bildung der zeitlichen Ableitung des aufgezeichneten Signals;
- Glättung des zeitlich abgeleiteten Signals;
- Erfassung des globalen Minimums des zeitlich abgeleiteten, geglätteten Signals;
- Erfassung des im Kurvenabschnitt zeitlich vor dem globalen Minimum liegenden globalen Maximums des zeitlich abgeleiteten Signals und Auswertung desselben im Sinne einer Zuordnung zum Anschlagen der Düsennadel bei ihrer Öffnungsbewegung; und
- Erfassung eines im Kurvenabschnitt zeitlich nach dem globalen Minimum liegenden globalen Maximums des geglätteten zeitlich abgeleiteten Signals und Auswertung desselben im Sinne einer Zuordnung zum Anschlagen der Düsennadel am Ende ihrer Schließbewegung.

2. Verfahren zur Erfassung des Einspritzvorgangs eines mit einer zwischen einer Öffnungsstellung und einer Schließstellung beweglichen Düsennadel versehenen Kraftstoffinjektors (1) einer Brennkraftmaschine durch Auswertung einer mittels eines Schallsensors (2) aufgenommenen Schallkurve,
**gekennzeichnet durch** die Schritte
- Aufzeichnung eines der Schallkurve entsprechenden Signals über einen den Einspritzvorgang enthaltenden Zeitraum unter Mittelung über eine vorgegebene Anzahl von Einspritzvorgängen;
- Glättung des aufgezeichneten gemittelten Signals;
- Bildung der zeitlichen Ableitung des aufgezeichneten Signals;
- Glättung des zeitlich abgeleiteten Signals;
- ein Schritt des Einstellens eines vorgegebenen Schwellwertes B;
- und dass bei der Erfassung des zeitlich ersten Maximums des zeitlich abgeleiteten Signals das im Kurvenabschnitt zeitlich vor dem erstmaligen Unterschreiten des vorgegebenen Schwellwertes B liegende globale Maximum des zeitlich abgeleiteten Signals erfasst wird;
- und dass bei der Erfassung des zeitlich zweiten Maximums des zeitlich abgeleiteten Signals das im Kurvenabschnitt zeitlich nach dem erstmaligen Unterschreiten des vorgegebenen zweiten Schwellwertes liegende globale Maximum des zeitlich abgeleiteten Signals erfasst wird;
- wobei ein Schritt der Erfassung des globalen Minimums des zeitlich abgeleiteten Signals vorgesehen ist; und
- wobei der Schritt des Einstellens des vorgegebenen Schwellwertes B das Einstellen auf einen vorgegebenen prozentualen Anteil des Wertes des erfassten globalen Minimums enthält.

3. Verfahren zur Erfassung des Einspritzvorgangs eines mit einer zwischen einer Öffnungsstellung und einer Schließstellung beweglichen Düsennadel versehenen Kraftstoffinjektors (1) einer Brennkraftmaschine durch Auswertung einer mittels eines Schallsensors (2) aufgenommenen Schallkurve,
**gekennzeichnet durch** die Schritte
- Aufzeichnung eines der Schallkurve entsprechenden Signals über einen den Einspritzvorgang enthaltenden Zeitraum unter Mittelung über eine vorgegebene Anzahl von Einspritzvorgängen;
- Glättung des aufgezeichneten gemittelten Signals;
- Bildung der zeitlichen Ableitung des aufgezeichneten Signals;
- Glättung des zeitlich abgeleiteten Signals;
- wobei ein Schritt des Einstellens eines vorgegebenen Schwellwertes C vorgesehen ist;
- und wobei bei Erfassung nur eines globalen Maximums des zeitlich abgeleiteten Signals mit einem Wert kleiner als der vorgegebene Schwellwert C dieses globale Maximum im Sinne einer Zuordnung zum Anschlagen der Düsennadel bei Ihrer Schließbewegung ausgewertet wird;
- wobei der Schwellwert C auf einen Wert eingestellt wird, der höher ist, als das Maximum, das dem Einspritzende entspricht, aber niedriger ist, als ein Maximum, das einem Anschlag der Düsennadel im oberen Sitz entsprechen würde.

4. Verfahren nach Anspruch 1, 2 oder 3,
**dadurch gekennzeichnet,**
**dass** zur Feststellung des Einspritzbeginns das aufgezeichnete Signal mit einem vorgegebenen Schwellwert A verglichen wird, und dass die Stelle, an der der Schwellwert zum ersten Mal überschritten wird, als Einspritzbeginn angenommen wird.

5. Verfahren nach einem der Ansprüche 1 bis 4,
**dadurch gekennzeichnet,**
**dass** das aufgezeichnete Signal einer Betragbildung unterzogen wird.

6. Verfahren nach einem der Ansprüche 1 bis 5,
**dadurch gekennzeichnet,**
**dass** das Aufzeichnen des der Schallkurve entsprechenden Signals unter Mittelung durch phasenkorrekte Stapelung des Signals über eine vorgegebene Anzahl n von Einspritzvorgängen erfolgt.

7. Verfahren nach Anspruch 6,
**dadurch gekennzeichnet,**
**dass** die Anzahl n der Schwingungsvorgänge, über die das aufgezeichnete Signal gemittelt wird, einstellbar ist.

8. Einrichtung zur Erfassung des Einspritzvorgangs eines mit einer zwischen einer Öffnungsstellung und einer Schließstellung beweglichen Düsennadel versehenen Kraftstoffinjektors (1) einer Brennkraftmaschine durch Auswertung einer mittels eines Schallsensors (2) aufgenommenen Schallkurve in einer Auswerteeinrichtung (5),
**dadurch gekennzeichnet,**
**dass** die Auswerteeinrichtung (5) vorgesehen ist zur
- Aufzeichnung eines der Schallkurve entsprechenden Signals über einen den Einspritzvorgang enthaltenden Zeitraum unter Mittelung über eine vorgegebene Anzahl von Einspritzvorgängen;
- Glättung des aufgezeichneten gemittelten Signals;
- Bildung der zeitlichen Ableitung des aufgezeichneten geglätteten Signals;
- Glättung des zeitlich abgeleiteten Signals;
- Erfassung des globalen Minimums des geglätteten zeitlich abgeleiteten Signals;
- Erfassung des im Kurvenabschnitt zeitlich vor dem globalen Minimum liegenden globalen Maximums des zeitlich abgeleiteten Signals und Auswertung desselben im Sinne einer Zuordnung zum Anschlagen der Düsennadel am Ende ihrer Öffnungsbewegung; und
- Erfassung eines im Kurvenabschnitt zeitlich nach dem globalen Minimum liegenden globalen Maximums des zeitlich abgeleiteten Signals und Auswertung desselben im Sinne einer Zuordnung zum Anschlagen der Düsennadel am Ende ihrer Schließbewegung.

9. Einrichtung zur Erfassung des Einspritzvorgangs eines mit einer zwischen einer Öffnungsstellung und einer Schließstellung beweglichen Düsennadel versehenen Kraftstoffinjektors (1) einer Brennkraftmaschine durch Auswertung einer mittels eines Schallsensors (2) aufgenommenen Schallkurve in einer Auswerteeinrichtung (5),
**dadurch gekennzeichnet,**
**dass** die Auswerteeinrichtung (5) vorgesehen ist zur
- Aufzeichnung eines der Schallkurve entsprechenden Signals über einen den Einspritzvorgang enthaltenden Zeitraum unter Mittelung über eine vorgegebene Anzahl von Einspritzvorgängen;
- Glättung des aufgezeichneten gemittelten Signals;
- Bildung der zeitlichen Ableitung des aufgezeichneten Signals;
- Glättung des zeitlich abgeleiteten Signals;
- ein Schritt des Einstellens eines vorgegebenen Schwellwertes B;
- zur Erfassung des im Kurvenabschnitt zeitlich vor dem erstmaligen Unterschreiten des vorgegebenen Schwellwertes B liegenden globalen Maximums des zeitlich abgeleiteten Signals als erstes Maximum;
- zur Erfassung des im Kurvenabschnitt zeitlich nach dem erstmaligen Unterschreiten des vorgegebenen Schwellwertes B liegende globale Maximum des zeitlich abgeleiteten Signals als zweites Maximum;
- und zur Erfassung des globalen Minimums des zeitlich abgeleiteten Signals;
- wobei das Einstellen des vorgegebenen Schwellwertes B ein Einstellen auf einen vorgegebenen prozentualen Anteil des Wertes des erfassten globalen Minimums enthält.

10. Einrichtung zur Erfassung des Einspritzvorgangs eines mit einer zwischen einer Öffnungsstellung und einer Schließstellung beweglichen Düsennadel versehenen Kraftstoffinjektors (1) einer Brennkraftmaschine durch Auswertung einer mittels eines Schallsensors (2) aufgenommenen Schallkurve in einer Auswerteeinrichtung (5),
**dadurch gekennzeichnet,**
**dass** die Auswerteeinrichtung (5) vorgesehen ist zur
- Aufzeichnung eines der Schallkurve entsprechenden Signals über einen den Einspritzvorgang enthaltenden Zeitraum unter Mittelung über eine vorgegebene Anzahl von Einspritzvorgängen;
- Glättung des aufgezeichneten gemittelten Signals;
- Bildung der zeitlichen Ableitung des aufgezeichneten Signals;
- Glättung des zeitlich abgeleiteten Signals;
- und zum Einstellen eines vorgegebenen Schwellwertes C;
- und bei Erfassung nur eines globalen Maximums des zeitlich abgeleiteten Signals mit einem Wert kleiner als der vorgegebene Schwellwert C zur Auswertung dieses globalen Maximums im Sinne einer Zuordnung zum Anschlagen der Düsennadel bei Ihrer Schließbewegung;
- wobei der Schwellwert C auf einen Wert eingestellt wird, der höher ist, als das Maximum, das dem Einspritzende entspricht, aber niedriger als ein Maximum ist, das einem Anschlag der Düsennadel im oberen Sitz entsprechen würde.

11. Einrichtung nach Anspruch 8, 9 oder 10,
**dadurch gekennzeichnet,**
**dass** zur Feststellung des Einspritzbeginns die Auswerteeinrichtung (5) für einen Vergleich des aufgezeichneten Signals mit einem vorgegebenen Schwellwert A und zur Auswertung der Stelle, an der der Schwellwert zum ersten Mal überschritten wird, als Einspritzbeginn, vorgesehen ist.

12. Einrichtung nach einem der Ansprüche 8 bis 11,
**dadurch gekennzeichnet,**
**dass** die Auswerteeinrichtung (5) zur Betragsbildung des aufgezeichneten Signals vorgesehen ist.

13. Einrichtung nach einem der Ansprüche 8 bis 11,
**dadurch gekennzeichnet,**
**dass** die Auswerteeinrichtung (5) zur Mittelung des der Schallkurve entsprechenden aufgezeichneten Signals durch phasenkorrekte Stapelung des Signals über eine vorgegebene Anzahl n von Einspritzvorgängen vorgesehen ist.

14. Einrichtung nach Anspruch 13,
**dadurch gekennzeichnet,**
**dass** die Auswerteeinrichtung (5) zur Einstellung der Anzahl n der Einspritzvorgänge, über die das aufgezeichnete Signal gemittelt wird, vorgesehen ist.

## Claims

1. Method for capturing the injection process of a fuel injector (1), provided with a nozzle needle which can move between an open position and closed position, of an internal combustion engine by evaluating a sound curve which is picked up by means of a sound sensor (2),
**characterized by** the steps
- recording of a signal, corresponding to the sound curve, over a time period containing the injection process, with averaging over a predefined number of injection processes;
- smoothing of the recorded, averaged signal;
- formation of the time derivative of the recorded signal;
- smoothing of the time-derived signal;
- capturing of the global minimum of the time-derived, smoothed signal;
- capturing of the global maximum of the time-derived signal which lies chronologically before the global minimum in the curve section, and evaluation of said global maximum for the purpose of assignment to the impacting of the nozzle needle during its opening movement; and
- capturing of a global maximum of the smoothed, time-derived signal which lies chronologically after the global minimum in the curved section, and evaluation of said global maximum for the purpose of assignment to the impacting of the nozzle needle at the end of its closing movement.

2. Method for capturing the injection process of a fuel injector (1), provided with a nozzle needle which can move between an open position and closed position, of an internal combustion engine by evaluating a sound curve which is picked up by means of a sound sensor (2),
**characterized by** the steps
- recording of a signal, corresponding to the sound curve, over a time period containing the injection process, with averaging over a predefined number of injection processes;
- smoothing of the recorded, averaged signal;
- formation of the time derivative of the recorded signal;
- smoothing of the time-derived signal;
- a step of setting a predefined threshold value B;
- and in that, when the chronologically first maximum of the time-derived signal is captured, the global maximum of the time-derived signal which lies chronologically before the first time the predefined threshold value B is undershot in the curved section, is captured;
- and in that, when the chronologically second maximum of the time-derived signal is captured, the global maximum of the time-derived signal which lies chronologically after the first time the predefined second threshold value is undershot in the curved section is captured;
- wherein a step for capturing the global minimum of the time-derived signal is provided; and
- wherein the step of setting the predefined threshold value B contains the step of setting to a predefined percentage of the value of the captured global minimum.

3. Method for capturing the injection process of a fuel injector (1), provided with a nozzle needle which can move between an open position and closed position, of an internal combustion engine by evaluating a sound curve which is picked up by means of a sound sensor (2),
**characterized by** the steps
- recording of a signal, corresponding to the sound curve, over a time period containing the injection process, with averaging over a predefined number of injection processes;
- smoothing of the recorded, averaged signal;
- formation of the time derivative of the recorded signal;
- smoothing of the time-derived signal;
- wherein a step of setting a predefined threshold value C is provided;
- and wherein, when just one global maximum of the time-derived signal is captured with a value less than the predefined threshold value C, this global maximum is evaluated for the purpose of assignment to the impacting of the nozzle needle during its closing movement;
- wherein the threshold value C is set to a value which is higher than the maximum which corresponds to the end of injection but is lower than a maximum which would correspond to impacting of the nozzle needle in the upper seat.

4. Method according to Claim 1, 2 or 3,
**characterized**
**in that** in order to determine the start of injection the recorded signal is compared with a predefined threshold value A, and in that the location at which the threshold value is exceeded for the first time is assumed to be the start of injection.

5. Method according to one of Claims 1 to 4,
**characterized**
**in that** the recorded signal is subjected to an absolute-value-forming process.

6. Method according to one of Claims 1 to 5,
**characterized**
**in that** the recording of the signal which corresponds to the sound curve is carried out with averaging by means of in-phase stacking of the signal over a predefined number n of injection processes.

7. Method according to Claim 6,
**characterized**
**in that** the number n of the oscillation processes over which the recorded signal is averaged can be set.

8. Device for capturing the injection process of a fuel injector (1), provided with a nozzle needle which can move between an open position and a closed position, of an internal combustion engine by evaluating a sound curve, picked up by means of a sound sensor (2), in an evaluation device (5),
**characterized**
**in that** the evaluation device (5) is provided for
- recording a signal, corresponding to the sound curve, over a time period containing the injection process, with averaging over a predefined number of injection processes;
- smoothing of the recorded, averaged signal;
- formation of the time derivative of the recorded smoothed signal;
- smoothing of the time-derived signal;
- capturing of the global minimum of the smoothed time-derived signal;
- capturing of the global maximum of the time-derived signal which lies chronologically before the global minimum in the curved section, and evaluation of said maximum for the purpose of assignment to the impacting of the nozzle needle at the end of its opening movement;
- capturing of a global maximum of the time-derived signal which lies chronologically after the global minimum in the curved section, and evaluation of said global maximum for the purpose of assigning to impacting of the nozzle needle at the end of its closing movement.

9. Device for capturing the injection process of a fuel injector (1), provided with a nozzle needle which can move between an open position and a closed position, of an internal combustion engine by evaluating a sound curve, picked up by means of a sound sensor (2), in an evaluation device (5),
**characterized**
**in that** the evaluation device (5) is provided for
- recording a signal, corresponding to the sound curve, over a time period containing the injection process, with averaging over a predefined number of injection processes;
- smoothing of the recorded, averaged signal;
- formation of the time derivative of the recorded signal;
- smoothing of the time-derived signal;
- a step of setting a predefined threshold value B;
- in order to capture the global maximum of the time-derived signal which lies chronologically before the first time the predefined threshold value B is undershot in the curved section as a first maximum value;
- in order to capture the global maximum of the time-derived signal which lies chronologically after the first time the predefined threshold value B was undershot in the curved section as a second maximum value;
- and in order to capture the global minimum of the time-derived signal;
- wherein the setting of the predefined threshold value B contains a setting to a predefined percentage of the value of the captured global minimum.

10. Device for capturing the injection process of a fuel injector (1), provided with a nozzle needle which can move between an open position and a closed position, of an internal combustion engine by evaluating a sound curve, picked up by means of a sound sensor (2), in an evaluation device (5),
**characterized**
**in that** the evaluation device (5) is provided for
- recording a signal corresponding to the sound curve, over a time period containing the injection process with averaging over a predefined number of injection processes;
- smoothing of the recorded, averaged signal;
- formation of the time derivative of the recorded signal;
- smoothing of the time-derived signal;
- and for setting a predefined threshold value C;
- and during the capturing of just one global maximum of the time-derived signal with a value less than the predefined threshold value C in order to evaluate this global maximum for the purpose of assignment to the impacting of the nozzle needle during its closing movement;
- wherein the threshold value C is set to a value which is higher than the maximum which corresponds to the end of injection but lower than a maximum which would correspond to impacting of the nozzle needle in the upper seat.

11. Device according to Claim 8, 9 or 10,
**characterized**
**in that** in order to determine the start of injection the evaluation device (5) is provided for a comparison of the recorded signal with a predefined threshold value A and for evaluating the location at which the threshold value is exceeded for the first time, as a start of injection.

12. Device according to one of Claims 8 to 11,
**characterized**
**in that** the evaluation device (5) is provided for the formation of absolute values of the recorded signal.

13. Device according to one of Claims 8 to 11,
**characterized**
**in that** the evaluation device (5) is provided for averaging the recorded signal, corresponding to the sound curve, by in-phase stacking of the signal over a predefined number n of injection processes.

14. Device according to Claim 13,
**characterized**
**in that** the evaluation device (5) is provided for setting the number n of injection processes over which the recorded signal is averaged.

## Revendications

1. Procédé de détection de l'opération d'injection d'un injecteur de carburant (1) d'un moteur à combustion interne muni d'un pointeau d'injecteur pouvant se déplacer entre une position d'ouverture et une position de fermeture en interprétant une courbe de bruit enregistrée au moyen d'un capteur acoustique (2), **caractérisé par** les étapes suivantes
- enregistrement d'un signal correspondant à la courbe de bruit sur une période incluant l'opération d'injection en calculant la moyenne sur un nombre prédéfini d'opérations d'injection ;
- lissage du signal moyen enregistré ;
- calcul de la dérivée dans le temps du signal enregistré ;
- lissage du signal dérivé dans le temps ;
- détection du minimum global du signal lissé dérivé dans le temps ;
- détection du maximum global du signal dérivé dans le temps, lequel est chronologiquement antérieur au minimum global dans la section de courbe, et interprétation de celui-ci dans le sens d'une affectation à l'arrivée en butée du pointeau d'injecteur lors de son mouvement d'ouverture ; et
- détection d'un maximum global du signal lissé dérivé dans le temps, lequel est chronologiquement postérieur au minimum global dans la section de courbe, et interprétation de celui-ci dans le sens d'une affectation à l'arrivée en butée du pointeau d'injecteur à la fin de son mouvement de fermeture.

2. Procédé de détection de l'opération d'injection d'un injecteur de carburant (1) d'un moteur à combustion interne muni d'un pointeau d'injecteur pouvant se déplacer entre une position d'ouverture et une position de fermeture en interprétant une courbe de bruit enregistrée au moyen d'un capteur acoustique (2), **caractérisé par** les étapes suivantes
- enregistrement d'un signal correspondant à la courbe de bruit sur une période incluant l'opération d'injection en calculant la moyenne sur un nombre prédéfini d'opérations d'injection ;
- lissage du signal moyen enregistré ;
- calcul de la dérivée dans le temps du signal enregistré ;
- lissage du signal dérivé dans le temps ;
- une étape de réglage d'une valeur de seuil prédéfinie B ;
- et que lors de la détection du premier maximum chronologique du signal dérivé dans le temps, le maximum global du signal dérivé dans le temps qui, dans la section de courbe, est chronologiquement antérieur au premier franchissement vers le bas de la valeur de seuil prédéfinie B, est détecté ;
- et que lors de la détection du deuxième maximum chronologique du signal dérivé dans le temps, le maximum global du signal dérivé dans le temps qui, dans la section de courbe, est chronologiquement postérieur au premier franchissement vers le bas de la deuxième valeur de seuil prédéfinie, est détecté ;
- une étape de détection du minimum global du signal dérivé dans le temps étant prévue ; et
- l'étape de réglage de la valeur de seuil prédéfinie B incluant le réglage à un pourcentage prédéfini de la valeur du minimum global détecté.

3. Procédé de détection de l'opération d'injection d'un injecteur de carburant (1) d'un moteur à combustion interne muni d'un pointeau d'injecteur pouvant se déplacer entre une position d'ouverture et une position de fermeture en interprétant une courbe de bruit enregistrée au moyen d'un capteur acoustique (2), **caractérisé par** les étapes suivantes
- enregistrement d'un signal correspondant à la courbe de bruit sur une période incluant l'opération d'injection en calculant la moyenne sur un nombre prédéfini d'opérations d'injection ;
- lissage du signal moyen enregistré ;
- calcul de la dérivée dans le temps du signal enregistré ;
- lissage du signal dérivé dans le temps ;
- une étape de réglage d'une valeur de seuil prédéfinie C étant prévue ;
- et lors de la détection d'un seul maximum global du signal dérivé dans le temps avec une valeur inférieure à la valeur de seuil prédéfinie C, ce maximum global étant interprété dans le sens d'une affectation à l'arrivée en butée du pointeau d'injecteur lors de son mouvement de fermeture ;
- la valeur de seuil C étant réglée à une valeur qui est supérieure au maximum qui correspond à la fin de l'injection, mais inférieure à un maximum qui correspondrait à une arrivée en butée du pointeau d'injecteur dans le siège supérieur.

4. Procédé selon la revendication 1, 2 ou 3, **caractérisé en ce que** pour constater le début de l'injection, le signal enregistré est comparé avec une valeur de seuil prédéfinie A et que le point où la valeur de seuil est dépassée pour la première fois est adopté comme étant le début de l'injection.

5. Procédé selon l'une des revendications 1 à 4, **caractérisé en ce que** le signal enregistré est soumis à un calcul de montant.

6. Procédé selon l'une des revendications 1 à 5, **caractérisé en ce que** l'enregistrement du signal correspondant à la courbe de bruit s'effectue en calculant la moyenne par un groupage correct en phase du signal sur un nombre n prédéfini d'opérations d'injection.

7. Procédé selon la revendication 6, **caractérisé en ce que** le nombre n de phénomènes d'oscillation sur lesquels est calculée la moyenne du signal enregistré est réglable.

8. Dispositif de détection de l'opération d'injection d'un injecteur de carburant (1) d'un moteur à combustion interne muni d'un pointeau d'injecteur pouvant se déplacer entre une position d'ouverture et une position de fermeture en interprétant dans un dispositif d'interprétation (5) une courbe de bruit enregistrée au moyen d'un capteur acoustique (2), **caractérisé en ce que** le dispositif d'interprétation (5) est prévu pour
- enregistrer un signal correspondant à la courbe de bruit sur une période incluant l'opération d'injection en calculant la moyenne sur un nombre prédéfini d'opérations d'injection ;
- lisser le signal moyen enregistré ;
- calculer la dérivée dans le temps du signal lissé enregistré ;
- lisser le signal dérivé dans le temps ;
- détecter le minimum global du signal lissé dérivé dans le temps ;
- détecter le maximum global du signal dérivé dans le temps, lequel est chronologiquement antérieur au minimum global dans la section de courbe, et interpréter celui-ci dans le sens d'une affectation à l'arrivée en butée du pointeau d'injecteur à la fin de son mouvement d'ouverture ; et
- détecter un maximum global du signal dérivé dans le temps, lequel est chronologiquement postérieur au minimum global dans la section de courbe, et interpréter celui-ci dans le sens d'une affectation à l'arrivée en butée du pointeau d'injecteur à la fin de son mouvement de fermeture.

9. Dispositif de détection de l'opération d'injection d'un injecteur de carburant (1) d'un moteur à combustion interne muni d'un pointeau d'injecteur pouvant se déplacer entre une position d'ouverture et une position de fermeture en interprétant dans un dispositif d'interprétation (5) une courbe de bruit enregistrée au moyen d'un capteur acoustique (2), **caractérisé en ce que** le dispositif d'interprétation (5) est prévu pour
- enregistrer un signal correspondant à la courbe de bruit sur une période incluant l'opération d'injection en calculant la moyenne sur un nombre prédéfini d'opérations d'injection ;
- lisser le signal moyen enregistré ;
- calculer la dérivée dans le temps du signal enregistré ;
- lisser le signal dérivé dans le temps ;
- une étape de réglage d'une valeur de seuil prédéfinie B ;
- pour détecter en tant que premier maximum le maximum global du signal dérivé dans le temps qui, dans la section de courbe, est chronologiquement antérieur au premier franchissement vers le bas de la valeur de seuil prédéfinie B ;
- pour détecter en tant que deuxième maximum le maximum global du signal dérivé dans le temps qui, dans la section de courbe, est chronologiquement postérieur au premier franchissement vers le bas de la valeur de seuil prédéfinie B ;
- et pour détecter le minimum global du signal dérivé dans le temps ;
- le réglage de la valeur de seuil prédéfinie B incluant le réglage à un pourcentage prédéfini de la valeur du minimum global détecté.

10. Dispositif de détection d'une opération d'injection d'un injecteur de carburant (1) d'un moteur à combustion interne muni d'un pointeau d'injecteur pouvant se déplacer entre une position d'ouverture et une position de fermeture en interprétant dans un dispositif d'interprétation (5) une courbe de bruit enregistrée au moyen d'un capteur acoustique (2), **caractérisé en ce que** le dispositif d'interprétation (5) est prévu pour
- enregistrer un signal correspondant à la courbe de bruit sur une période incluant l'opération d'injection en calculant la moyenne sur un nombre prédéfini d'opérations d'injection ;
- lisser le signal moyen enregistré ;
- calculer la dérivée dans le temps du signal enregistré ;
- lisser le signal dérivé dans le temps ;
- et pour régler une valeur de seuil prédéfinie C ;
- et lors de la détection d'un seul maximum global du signal dérivé dans le temps avec une valeur inférieure à la valeur de seuil prédéfinie C, pour interpréter ce maximum global dans le sens d'une affectation à l'arrivée en butée du pointeau d'injecteur lors de son mouvement de fermeture ;
- la valeur de seuil C étant réglée à une valeur qui est supérieure au maximum qui correspond à la fin de l'injection, mais inférieure à un maximum qui correspondrait à une arrivée en butée du pointeau d'injecteur dans le siège supérieur.

11. Dispositif selon la revendication 8, 9 ou 10, **caractérisé en ce que** pour constater le début de l'injection, le dispositif d'interprétation (5) est prévu pour comparer le signal enregistré avec une valeur de seuil prédéfinie A et pour interpréter en tant que début de l'injection le point où la valeur de seuil est dépassée pour la première fois.

12. Dispositif selon l'une des revendications 8 à 11, **caractérisé en ce que** le dispositif d'interprétation (5) est prévu pour calculer le montant du signal enregistré.

13. Dispositif selon l'une des revendications 8 à 11, **caractérisé en ce que** le dispositif d'interprétation (5) est prévu pour calculer la moyenne du signal enregistré correspondant à la courbe de bruit en effectuant un groupage correct en phase du signal sur un nombre n prédéfini d'opérations d'injection.

14. Procédé selon la revendication 13, **caractérisé en ce que** le dispositif d'interprétation (5) est prévu pour régler le nombre n d'opérations d'injection sur lesquelles est calculée la moyenne du signal enregistré.
